# EUROPEAN PATENT SPECIFICATION

(11) **EP 3 261 291 B1**
(45) Date of publication and mention of the grant of the patent: **16.06.2021**
(21) Application number: 16175823.0
(22) Date of filing: 22.06.2016
(51) Int. Cl.: H04L 29/08, H04L 12/24, H04W 24/02, G06F 9/455, H04L 12/46

(54) **METHOD FOR ENHANCED MANAGEMENT AND/OR DEPLOYMENT OF NETWORK NODES OF A COMMUNICATIONS NETWORK, COMMUNICATIONS NETWORK, A PLURALITY OF PHYSICAL AND/OR VIRTUAL MACHINES, ORCHESTRATION ENTITY, PROGRAM AND COMPUTER PROGRAM PRODUCT**
VERFAHREN ZUR VERBESSERTEN VERWALTUNG UND/ODER ANWENDUNG VON NETZWERKKNOTEN EINES KOMMUNIKATIONSNETZWERKS, KOMMUNIKATIONSNETZWERK, EINE VIELZAHL VON PHYSISCHEN UND/ODER VIRTUELLEN MASCHINEN, ORCHESTRIERUNGSENTITÄT, PROGRAMM UND COMPUTERPROGRAMMPRODUKT
PROCÉDÉ DE GESTION AMÉLIORÉ ET/OU DE DÉPLOIEMENT DE NOEUDS DE RÉSEAU D'UN RÉSEAU DE COMMUNICATIONS, RÉSEAU DE COMMUNICATIONS, PLURALITÉ DE MACHINES PHYSIQUES ET/OU VIRTUELLES, ENTITÉ D'ORCHESTRATION, PROGRAMME ET PRODUIT PROGRAMME D'ORDINATEUR

(43) Date of publication of application: 27.12.2017
(73) Proprietor: Deutsche Telekom AG, 53113 Bonn (DE)
(72) Inventor: SOBANIA, Alexander, 53757 Sankt Augustin (DE)
(74) Representative: Schwöbel, Thilo K.

(56) References cited:
- WO-A1-2015/180761
- WO-A1-2016/071736
- US-A1- 2012 117 212
- US-A1- 2013 232 480
- STEVEN J VAUGHAN-NICHOLS: "OpenFlow: The Next Generation of the Network?", COMPUTER, IEEE COMPUTER SOCIETY, USA, vol. 44, no. 8, 1 August 2011 (2011-08-01) , pages 13-15, XP011373329, ISSN: 0018-9162, DOI: 10.1109/MC.2011.250

## Description

### BACKGROUND

The present invention relates to a method for enhanced management and/or deployment of network nodes of a communications network, wherein the communications network comprises a plurality of physical and/or virtual machines in a network architecture of the communications network realizing software defined network technologies, wherein at least one of the plurality of physical and/or virtual machines realizes or is associated with at least one network node functionality of the communications network.

Furthermore, the present invention relates to a communications network for enhanced management and/or deployment of network nodes of a communications network, wherein the communications network comprises a plurality of physical and/or virtual machines in a network architecture of the communications network realizing software defined network technologies, wherein at least one of the plurality of physical and/or virtual machines realizes or is associated with at least one network node functionality of the communications network.

Furthermore, the present invention relates to a plurality of physical and/or virtual machines for enhanced management and/or deployment of network nodes of a communications network, wherein the plurality of physical and/or virtual machines are part of the communications network having a network architecture realizing software defined network technologies, wherein at least one of the plurality of physical and/or virtual machines realizes or is associated with at least one network node functionality of the communications network.

Furthermore, the present invention relates to an orchestration entity for enhanced management and/or deployment of network nodes of a communications network, wherein the communications network comprises a plurality of physical and/or virtual machines in a network architecture of the communications network realizing software defined network technologies, wherein at least one of the plurality of physical and/or virtual machines realizes or is associated with at least one network node functionality of the communications network.

Another aspect of the present invention relates to a program and to a computer program product for enhanced tracing and/or monitoring of the network nodes of a communications network according to the inventive method, the inventive communications network, the plurality of virtual machines, and the virtualized network function manager functionality.

Network management is a big challenge in large-scale enterprise and data center environments. Furthermore, data centers are becoming likewise important for operators of telecommunications networks, and especially mobile communications networks, especially due to technologies such as virtualization and software defined networks.

The management of such data centers is quite complex and requires a lot of effort. Therefore, a lot of work is done in the automation area to reduce the manual interaction as much as possible. In this context WO 2016/071736 A1 describes systems and methods for managing a service set in network function virtualization, in which, when a first service in the service set is transferred from a first host to a second host, other services in the service set can be identified to be also transferred to the second host to maintain quality of service and latency during traffic processing.

### SUMMARY

It is an object of the present invention to provide a method for enhanced management and/or deployment of network nodes of a communications network comprising a plurality of physical and/or virtual machines in a network architecture of the communications network realizing software defined network technologies such that it is possible to realize a greater flexibility, a higher reliability and a reduced maintenance of the communications network, especially regarding the deployment of new network nodes and/or regarding updating of network nodes.

The object of the present invention is achieved by a method according to claim 1.

It is thereby advantageously possible according to the present invention that a higher degree of flexibility can be achieved, by means of the inventive method, in automatically providing a given network node with a working image (typically comprising an operating system), especially upon deployment of a new network node (i.e. a network node to be added to the network nodes of the communications network). According to the present invention, this is possible by means of a configuration management client being transmitted to a specific physical and/or virtual machine of the plurality of physical and/or virtual machines of the communications network, and, subsequently, the configuration management client requesting, from a configuration management entity, configuration management data in order to finalize the configuration of the specific physical and/or virtual machine. This means that it is advantageously possible to retain, at an image database entity, a common configuration image of the network node (i.e. the specific physical and/or virtual machine) to be deployed, transmit this common configuration image to the network node to be deployed, and, afterwards, to modify (or upgrade or update) the configuration of the network node - corresponding to the configuration as provided by the common configuration image - by means of the configuration client (being part of the common configuration image) requesting the configuration management data in order to finalize the configuration of the considered network node, i.e. the specific physical and/or virtual machine. Later on, snapshot data of the specific physical and/or virtual machine are transmitted to a snapshot database entity of the communications network. By means of first transmitting a common configuration image of the network node (i.e. of the specific physical and/or virtual machine), it is advantageously possible according to the present invention that less images are to be retained in the image database entity, especially only one image for different (and/or different types or categories of) specific physical and/or virtual machines (or network nodes) and/or only one image for different update versions of the specific physical and/or virtual machines (or network nodes).

According to an embodiment of the present invention, the method further comprises, subsequent to the third step, a fourth step, wherein in the fourth step, an update or a change of the configuration of the specific physical and/or virtual machine of the plurality of physical and/or virtual machines is performed, by means of triggering the configuration management entity to update or change the configuration of the specific physical and/or virtual machine, thereby transmitting further configuration management data.

By means of updating or changing the configuration of the specific physical and/or virtual machine in the fourth step by transmitting further configuration management data, it is advantageously possible to flexibly provide updates or configuration changes to the specific physical and/or virtual machine.

According to a further embodiment of the present invention, the method further comprises, subsequent to the fourth step, a fifth step, wherein in the fifth step, further snapshot data of the specific physical and/or virtual machine are transmitted to the snapshot database entity of the communications network.

By means of additionally transmitting further snapshot data of the specific physical and/or virtual machine to the snapshot database entity, it is advantageously possible to always retain, at the snapshot database entity, the current configuration status of the considered specific physical and/or virtual machine, and hence (as the specific physical and/or virtual machine could be any of the network nodes within the communications network) of all (or almost all) network nodes of the communications network.

According to an additional embodiment of the present invention, the method further comprises, subsequent to the fifth step, a sixth step, wherein in the sixth step, recovery data regarding the specific physical and/or virtual machine are transmitted from the snapshot database entity of the communications network to the specific physical and/or virtual machine.

By means of transmitting the recovery data to the specific physical and/or virtual machine, it is advantageously possible to easily recover the current state of the specific physical and/or virtual machine.

According to the present invention, during the first step, the specific physical and/or virtual machine is provided with an operating system by means of transmitting operating system data, from an image database entity of the communications network, to the specific physical and/or virtual machine, wherein the configuration management client is especially installed with the operating system or as a part of the operating system, wherein the configuration management client is especially specific to the specific physical and/or virtual machine, wherein the operating system data correspond to a basic version of the operating system of the specific physical and/or virtual machine.

According to an additional embodiment of the present invention, the operating system data correspond to a standard installation of the operating system of the specific physical and/or virtual machine, and/or
wherein during the second step, the configuration management client is authenticated - prior to requesting the configuration management data - by the configuration management entity of the communications network.

Thereby, it is advantageously possible according to the present invention that update cycles regarding the images retained in the image database entity can be made longer, hence, allowing for a reduced management effort regarding the image database entity.

According to the present invention, the communications network is a mobile communications network, and wherein the plurality of physical and/or virtual machines realize or are associated with the network node functionality of at least one of the following:
-- one or a plurality of mobility management entity node(s),
-- one or a plurality of serving gateway node(s),
-- one or a plurality of packet gateway node(s)
-- one or a plurality of network layers of the mobile communications network, especially related to different radio access technologies.

Furthermore, the present invention relates to a communications network according to claim 8 for enhanced management and/or deployment of network nodes of a communications network.

Thereby, it is advantageously possible according to the present invention that a higher degree of flexibility can be achieved, by means of the inventive communications network, in automatically providing a given network node with a working image (typically comprising an operating system), especially upon deployment of a new network node (i.e. a network node to be added to the network nodes of the communications network).

According to the present invention, the communications network comprises, besides the snapshot database entity and the configuration management entity, an image database entity, and especially an orchestration entity.

Thereby, it is advantageously possible according to the present invention that a flexible approach relating to the deployment of network nodes within the communications network and/or relating to updating of network nodes within the communications network is possible.

According to still a further embodiment of the communications network according to the present invention, the communications network and/or the orchestration entity is configured such that
-- the image database entity is triggered, by the orchestration entity, in order to transmit the configuration management client and/or the operating system data to the specific physical and/or virtual machine, and/or
-- the configuration management entity and/or the configuration management client and/or the specific physical and/or virtual machine is triggered, by the orchestration entity, in order to transmit the configuration management data in order to finalize the configuration of the specific physical and/or virtual machine and/or to transmit the further configuration management data, and/or
-- the snapshot database entity and/or the configuration management client and/or the specific physical and/or virtual machine is triggered, by the orchestration entity, in order to transmit snapshot data of the specific physical and/or virtual machine and/or further snapshot data of the specific physical and/or virtual machine to the snapshot database entity of the communications network.

Furthermore, the present invention relates to a plurality of physical and/or virtual machines according to claim 11 for enhanced management and/or deployment of network nodes of a communications network.

Thereby, it is advantageously possible according to the present invention that a higher degree of flexibility can be achieved, by means of the inventive plurality of physical and/or virtual machines, in automatically providing a given network node with a working image (typically comprising an operating system), especially upon deployment of a new network node (i.e. a network node to be added to the network nodes of the communications network).

Additionally, the present invention relates to an orchestration entity according to claim 12 for enhanced management and/or deployment of network nodes of a communications network.

Additionally, the present invention relates to a program comprising a computer readable program code which, when executed on a computer or on a physical and/or virtual machine of a communications network causes the computer or the physical and/or virtual machine of the communications network to perform the method according to the present invention.

Still additionally, the present invention relates to a computer program product for enhanced management and/or deployment of network nodes of a communications network, the computer program product comprising a computer program stored on a storage medium, the computer program comprising program code which, when executed on a computer or on a physical and/or virtual machine of a communications network causes the computer or the physical and/or virtual machine of the communications network to perform the method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrate a mobile telecommunications network for enhanced management and/or deployment of network nodes of a communications network, wherein a mobile communications network is used as an example of a communications network according to the present invention and especially according to the inventive method.
**Figures 2** to **7** schematically illustrate an overview of an inventive system comprising a plurality of physical and/or virtual machines, the management and/or deployment of which being orchestrated by an orchestration entity.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

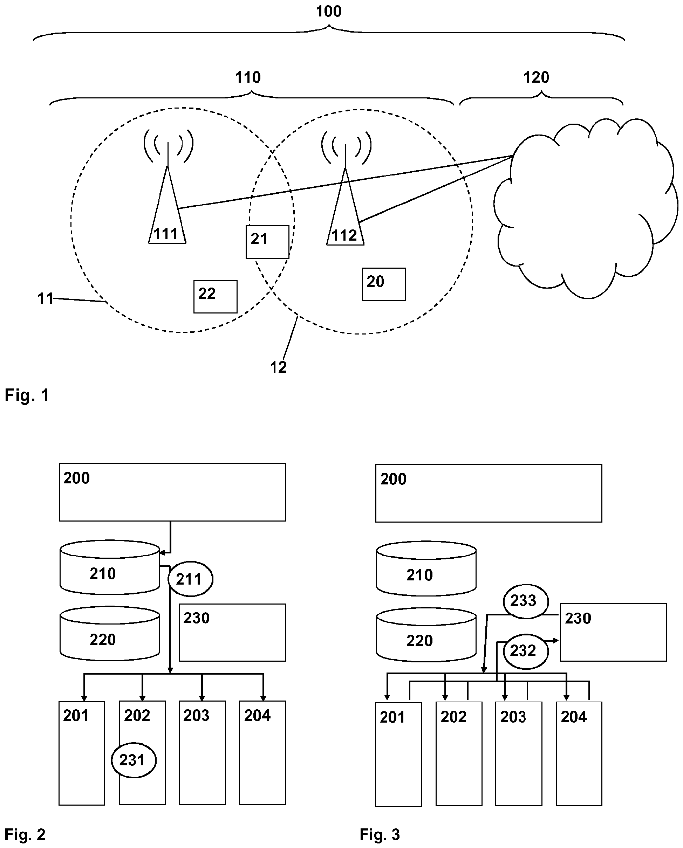

In Figure 1, a mobile telecommunications network 100 according to the present invention is schematically illustrated. According to the exemplary embodiment of Figure 1, the communications network 100 is implemented as comprising a radio access network 110 and a core network 120. The radio access network 110 of the mobile communications network 100 comprises a plurality of radio cells of which a first radio cell 11 and a second radio cell 12 is exemplarily represented. The radio cells 11, 12 correspond to radio coverage areas of base station entities, typically NodeBs or eNodeBs, of which a first base station entity 111 and a second base station entity 112 is schematically represented in Figure 1. The communications network 100 is configured to provide communication services to a plurality of user equipments 20, 21, 22.

Especially the core network 120 of the communications network 100 (or communications network 100) - but, at least in principle and/or at least in part also the access network 110 of the communications network 100 - comprises a plurality of network nodes or network entities that are not necessarily represented in detail. The different network nodes or network entities are required for providing different network node functionalities such that the communications network 100 is able to provide the communication services to its users; in the case of a mobile communications network such communication services are typically requested -directly or indirectly - by the user equipments 20, 21, 22.

For the inventive mobile communications network 100, the following examples of network node functionalities could apply (especially for the cases of the mobile communications network being an LTE or UMTS network):
-- the network node functionalities of one or a plurality of mobility management entity node(s),
-- the network node functionalities of one or a plurality of serving gateway node(s),
-- the network node functionalities of one or a plurality of packet gateway node(s)
-- the network node functionalities of one or a plurality of home subscriber server node(s)
-- the network node functionalities of one or a plurality of packet data network node(s)
-- the network node functionalities of one or a plurality of mobile switching center node(s)
-- the network node functionalities of one or a plurality of visitor location register node(s)
-- the network node functionalities of one or a plurality of serving GPRS support node(s) (SGSN).

The present invention relates to any mobile telecommunications network comprising network nodes that can be virtualized. Accordingly, the mobile communications network comprising a core network 120 as shown in Figure 1, only represents an example of a communications network according to the present invention..

In Figures 2 to 7, an overview of an inventive system, comprising a communications network 100, and comprising a plurality of physical and/or virtual machines 201, 202, 203, 204 is schematically represented, the management and/or deployment of which being orchestrated by an orchestration entity 200. In the exemplary embodiment shown in Figures 2 to 7, a first physical and/or virtual machine 201, a second physical and/or virtual machine 202, a third physical and/or virtual machine 203, and a fourth physical and/or virtual machine 204 are schematically shown, representing a plurality of physical and/or virtual machines, typically comprising a number of physical and/or virtual machines of the order of magnitude of at least 10, or at least 50, or at least 100, or at least 200, or at least 500, or at least 1000. Besides the orchestration entity 200, the communications network 100 and/or the inventive system comprises an image database entity 210, a snapshot database entity 220, and a configuration management entity 230.

According to the present invention, the communications network 100 comprises the plurality of physical and/or virtual machines 201, 202, 203, 204 in a network architecture of the communications network 100 realizing software defined network technologies, wherein at least one of the plurality of physical and/or virtual machines 201, 202, 203, 204 realizes or is associated with at least one network node functionality of the communications network 100.

According to the inventive method, in a first step, a configuration management client 231 is transmitted to a specific physical and/or virtual machine of the plurality of physical and/or virtual machines 201, 202, 203, 204. In the following, the second physical and/or virtual machine 202 is exemplarily considered as the specific physical and/or virtual machine; however, any other of the plurality of physical and/or virtual machines 201, 202, 203, 204 could have been chosen as well. The step of transmitting the configuration management client 231 to the second physical and/or virtual machine 202 as the specific physical and/or virtual machine is schematically shown in Figure 2.

Either prior to the first step or during the first step, operating system data 211 are transmitted to the specific physical and/or virtual machine (i.e. the second physical and/or virtual machine 202 in the example considered). The operating system data 211 are transmitted from the image database entity 210 of the communications network 100, to the specific physical and/or virtual machine (or second physical and/or virtual machine 202). The configuration management client 231 is also transmitted, to the specific physical and/or virtual machine, by the image database entity 210.

Especially, the configuration management client 231 is installed with the operating system or as a part of the operating system (of the second physical and/or virtual machine 202 in the example considered), and the configuration management client 231 is especially specific to the specific physical and/or virtual machine (i.e. the second physical and/or virtual machine 202 in the example considered). Furthermore, the operating system data correspond to a basic version of the operating system and/or the specific physical and/or virtual machine. The operating system data 211 especially correspond to a standard installation of the operating system of the specific physical and/or virtual machine.

In a second step according to the inventive method, subsequent to the first step, the configuration management client 231 requests - by means of configuration request data 232 - configuration management data 233 in order to finalize the configuration of the specific physical and/or virtual machine. The configuration management data 233 are especially requested from the configuration management entity 230 of the communications network 100. Especially, the configuration management client 231 (of the, i.e. especially each, specific physical and/or virtual machine) is authenticated - prior to requesting the configuration management data 233 - by the configuration management entity 230 of the communications network 100. The step of requesting the configuration management data 233 and of transmitting the configuration management data 233 to the specific physical and/or virtual machine (i.e. the second physical and/or virtual machine 202) is schematically shown in Figure 3.

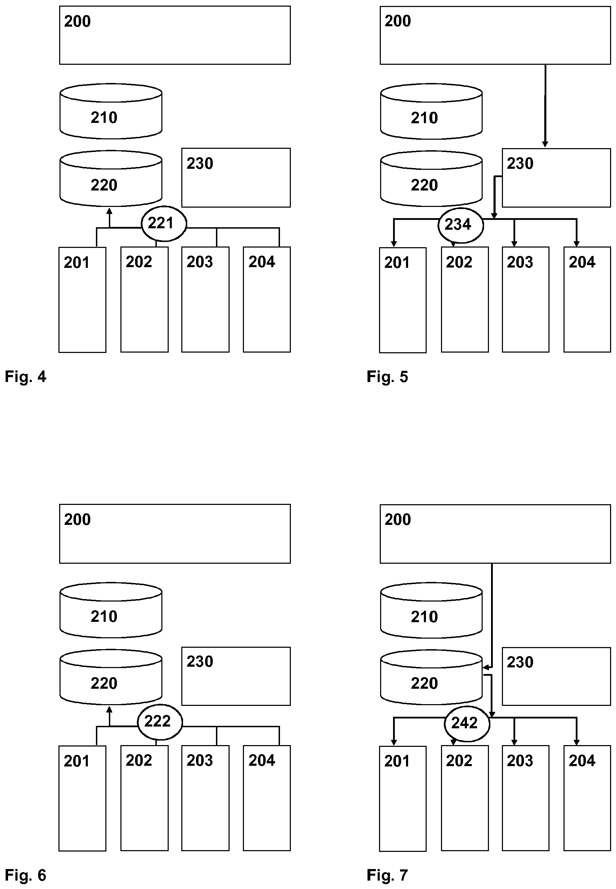

In a third step according to the inventive method, subsequent to the second step, snapshot data 221 of the specific physical and/or virtual machine (i.e. of the second physical and/or virtual machine according to the exemplary embodiment shown) are transmitted to the snapshot database entity 220 of the communications network 100. The step of transmitting the snapshot data 221 to the snapshot database entity 220 is schematically shown in Figure 4.

In a fourth step according to the inventive method, subsequent to the third step, an update or a change of the configuration of the specific physical and/or virtual machine of the plurality of physical and/or virtual machines 201, 202, 203, 204 is performed, by means of triggering the configuration management entity 230 to update or change the configuration of the specific physical and/or virtual machine, thereby transmitting further configuration management data 234. The step of transmitting further configuration management data 234 to the specific physical and/or virtual machine is schematically shown in Figure 5.

In a fifth step according to the inventive method, subsequent to the fourth step, further snapshot data 222 of the specific physical and/or virtual machine (i.e. of the second physical and/or virtual machine according to the exemplary embodiment shown) are transmitted to the snapshot database entity 220 of the communications network 100. The step of transmitting the further snapshot data 222 to the snapshot database entity 220 is schematically shown in Figure 6.

In a sixth step according to the inventive method, subsequent to the fifth step, recovery data 242 regarding the specific physical and/or virtual machine are transmitted from the snapshot database entity 220 of the communications network 100 to the specific physical and/or virtual machine. The step of transmitting the recovery data 242 to the specific physical and/or virtual machine is schematically shown in Figure 7.

According to conventionally known techniques, several concepts are already available how data centers can be managed in an automated way. Such techniques include the following two main approaches:
In a first approach, a multitude of images are used which can be created anywhere to deploy the network node of the data centers and to ensure the required software is installed and configured within the images, thereby being able to deploy a network node (once such a network node has to be deployed) in a comparatively fast and simple manner by initiating the boot process using an image; however, dealing with images is inflexible and upgrades, changes or patches cause a lot of effort because every time a new image has to be created, and the system administrator has to ensure that every change is documented and pushed into the new image (i.e. an updated image), thereby increasing the number of different images to be managed and handled, i.e. the management of the images itself constitutes a challenge.
In a second approach, management tools are used to install and configure the software required within the respective network nodes according to specific descriptions after the hardware has been booted with a blank operating system, thus providing the possibility to be applied to a comparatively large scale (i.e. number of network nodes); however, using management tools relies on the management tool itself which can cause, for example, security breaches; additionally, the boot process is rather slow because the packages need to be installed and configured every time the network node is deployed.

Hence, both conventionally known approaches have disadvantages, and in choosing one such approach, considerable drawbacks have to be accepted when operating a data center implementing such approaches.

According to the present invention, a method of managing data centers (or a system comprising a communication network and a plurality of physical and/or virtual machines 201, 202, 203, 204) combining elements of both above mentioned approaches is proposed which leverages the benefits of each approach and reduces the disadvantages. According to the present invention, the orchestration entity 200 is responsible for the end to end workflow and the life cycle of the data center. It triggers different management modules and has status information of the running environment. It is in charge of the deployment, the changes and updates and recovery of the network nodes of the data center (i.e. the plurality of physical and/or virtual machine 201, 202, 203, 204). The configuration management entity 230 is responsible for the software installation and configuration on top of operating systems. It abstracts the software and the configuration with the help of objects from the particular environment. The configuration management entity 230 requires access to the operating system which in most cases is done via a client running on the operating system (configuration management client 231). The image database entity 210 stores basic images with different operating systems, especially including the configuration management client 231 if required. The snapshot database entity 220 stores copies of the running servers (i.e. network nodes or physical and/or virtual machines) with the respective operating system, the software and the configuration as images.

The inventive method comprises, as process steps, the deployment:
The server or network node or physical and/or virtual machine has to be started by a process like Preboot Execution Environment (PXE) which enables the booting of a network node or physical and/or virtual machine with protocols like DHCP (Dynamic Host Configuration Protocol). It can be leveraged to boot an operating system, on the network node or physical and/or virtual machine, remotely based on an image. The image is taken from the image database entity 210 and has a basic version of the operating system, including the configuration management client 231 for configuration management if required. The initiation of the deployment process has to be done by the orchestrator entity 200.
Once the operation system is working, the configuration management has to install the required software, configure and start it. In general the configuration management client 231 should get in touch with the configuration management entity (or configuration management server) 230, authenticate itself and request a specific configuration (i.e. configuration management data 233). The parameters which are required for this procedure have to be injected by the orchestrator entity 200 during the deployment process. Once the configuration management client 231 is registered, the configuration management entity 230 is aware of it and can push new and changed configuration (configuration management data 233) into it.
After completing this process, the orchestration entity 200 has to take a snapshot of the environment; snapshot data 221 are saved, corresponding to the status of the operation system including all the applications and configurations stored there.
Once a change in the software or the configuration has to be done, the change has to be done through the configuration management entity 230. The description used for the update and changes can be applied to the server or network node in a deterministic manner. It can be repeated on different servers or network nodes, even for different operating systems, and should always have the same result. This is achieved by the configuration management entity 230 through a certain abstraction of the description and the object to be configured. The orchestration entity 200 typically notices the change and triggers an update of the server via the configuration management entity 230. After completion of the change, the orchestrator or orchestration entity 200 typically takes a snapshot (further snapshot data 222) of the server or network node, with a new version number.

For recovery purposes, the orchestrator or orchestration entity is monitoring the server or network node, the operating system and the software running on it. In case of disasters or problems with the server considered or the network node considered, the orchestrator or orchestration entity 200 is typically able to trigger the redeployment of the server or network node by loading the latest snapshot (i.e. the snapshot data 221 or the further snapshot data 222).

According to the present invention, the administrator is enabled to have a flexible deployment with all the benefits configuration management is offering such as abstraction from the hardware and operating system, the deterministic results and the portability of the configuration. Changes and Updates can be applied in a simple way on the running environment. They are tracked via the configuration management entity 230 (typically in the form of descriptions to ensure reliable version control). For recovery purposes on the other hand, it is possible - by means of using snapshots - to be able to redeploy the servers or network nodes, in case of any problem, in a very fast, easy and efficient way without having any specific knowledge about the environment of the network nodes or the servers that are to be redeployed.

## Claims

1. Method for enhanced management and/or deployment of network nodes of a communications network (100), wherein the communications network (100) is a mobile communications network and comprises a plurality of physical and/or virtual machines (201, 202, 203, 204) in a network architecture of the communications network (100) realizing software defined network technologies, wherein at least one of the plurality of physical and/or virtual machines (201, 202, 203, 204) realizes or is associated with at least one network node functionality of the communications network (100), wherein an image database entity (210) of the communication network (100) retains a common configuration image of a specific physical and/or virtual machine of the plurality of physical and/or virtual machines (201, 202, 203, 204), wherein the plurality of physical and/or virtual machines (201, 202, 203, 204) realize or are associated with the network node functionality of at least one of the following:
-- one or a plurality of mobility management entity node(s),
-- one or a plurality of serving gateway node(s),
-- one or a plurality of packet gateway node(s)
-- one or a plurality of network layers of the mobile communications network, wherein the method is **characterized by** the following steps:
-- in a first step, the specific physical and/or virtual machine is provided with the common configuration image by means of transmitting operating system data (211) from the image database entity (210) to the specific physical and/or virtual machine, wherein the common configuration image comprises an operating system and a configuration management client (231), wherein the operating system data (211) correspond to a basic version of the operating system of the specific physical and/or virtual machine,
-- in a second step, subsequent to the first step, the configuration management client (231) requests, from a configuration management entity (230) of the communications network (100), configuration management data (233) in order to finalize the configuration of the specific physical and/or virtual machine by modifying the configuration provided by the common configuration image,
-- in a third step, subsequent to the second step, snapshot data (221) of the specific physical and/or virtual machine are transmitted to a snapshot database entity (220) of the communications network (100).

2. Method according to claim 1, wherein the method further comprises, subsequent to the third step, a fourth step, wherein in the fourth step, an update or a change of the configuration of the specific physical and/or virtual machine of the plurality of physical and/or virtual machines (201, 202, 203, 204) is performed, by means of triggering the configuration management entity (230) to update or change the configuration of the specific physical and/or virtual machine, thereby transmitting further configuration management data (234).

3. Method according to claim 2, wherein the method further comprises, subsequent to the fourth step, a fifth step, wherein in the fifth step, further snapshot data (222) of the specific physical and/or virtual machine are transmitted to the snapshot database entity (220) of the communications network (100).

4. Method according to claim 3, wherein the method further comprises, subsequent to the fifth step, a sixth step, wherein in the sixth step, recovery data (242) regarding the specific physical and/or virtual machine are transmitted from the snapshot database entity (220) of the communications network (100) to the specific physical and/or virtual machine.

5. Method according to one of the preceding claims, wherein the configuration management client (231) is installed as a part of the operating system and/or wherein the configuration management client (231) is specific to the specific physical and/or virtual machine.

6. Method according to one of the preceding claims, wherein during the second step, the configuration management client (231) is authenticated - prior to requesting the configuration management data (233) - by the configuration management entity (230) of the communications network (100).

7. Method according to one of the preceding claims, wherein the
-- one or the plurality of network layers of the mobile communications network are related to different radio access technologies.

8. Communications network (100) for enhanced management and/or deployment of network nodes of a communications network (100), wherein the communications network (100) is a mobile communications network and comprises a configuration management entity (231), a snapshot database entity (220), a image database entity (210), and a plurality of physical and/or virtual machines (201, 202, 203, 204) in a network architecture of the communications network (100) realizing software defined network technologies, wherein at least one of the plurality of physical and/or virtual machines (201, 202, 203, 204) realizes or is associated with at least one network node functionality of the communications network (100), wherein the image database entity (210) retains a common configuration image of a specific physical and/or virtual machine of the plurality of physical and/or virtual machines (201, 202, 203, 204), wherein the plurality of physical and/or virtual machines (201, 202, 203, 204) realize or are associated with the network node functionality of at least one of the following:
-- one or a plurality of mobility management entity node(s),
-- one or a plurality of serving gateway node(s),
-- one or a plurality of packet gateway node(s)
-- one or a plurality of network layers of the mobile communications network,
wherein the communications network (100) is **characterized by** being configured such that
-- the specific physical and/or virtual machine is provided with the common configuration image by means of transmitting operating system data (211) from the image database entity (210) to the specific physical and/or virtual machine, wherein the common configuration image comprises an operating system and a configuration management client (231), wherein the operating system data (211) correspond to a basic version of the operating system of the specific physical and/or virtual machine,
-- the configuration management client (231) requests, from the configuration management entity (230), configuration management data (233) in order to finalize the configuration of the specific physical and/or virtual machine by modifying the configuration provided by the common configuration image,
-- snapshot data (221) of the specific physical and/or virtual machine are transmitted to the snapshot database entity (220).

9. Communications network (100) according to claim 8, wherein the communications network (100) comprises, besides the snapshot database entity (220) and the configuration management entity (230) an orchestration entity (200).

10. Communications network (100) according to claim 9, wherein the communications network (100) and/or the orchestration entity (200) is configured such that
-- the image database entity (210) is triggered, by the orchestration entity (200), in order to transmit the configuration management client (231) and/or the operating system data (211) to the specific physical and/or virtual machine, and/or
-- the configuration management entity (230) and/or the configuration management client (231) and/or the specific physical and/or virtual machine is triggered, by the orchestration entity (200), in order to transmit the configuration management data (233) in order to finalize the configuration of the specific physical and/or virtual machine and/or to transmit the further configuration management data (234), and/or
-- the snapshot database entity (220) and/or the configuration management client (231) and/or the specific physical and/or virtual machine is triggered, by the orchestration entity (200), in order to transmit snapshot data (221) of the specific physical and/or virtual machine and/or further snapshot data (222) of the specific physical and/or virtual machine to the snapshot database entity (220) of the communications network (100).

11. A plurality of physical and/or virtual machines (201, 202, 203, 204) for enhanced management and/or deployment of network nodes of a communications network (100), wherein the plurality of physical and/or virtual machines (201, 202, 203, 204) are part of the communications network (100), wherein the communications network (100) is a mobile communications network having a network architecture realizing software defined network technologies, wherein at least one of the plurality of physical and/or virtual machines (201, 202, 203, 204) realizes or is associated with at least one network node functionality of the communications network (100), wherein an image database entity (210) of the communication network (100) retains a common configuration image of a specific physical and/or virtual machine of the plurality of physical and/or virtual machines (201, 202, 203, 204), wherein the plurality of physical and/or virtual machines (201, 202, 203, 204) realize or are associated with the network node functionality of at least one of the following:
-- one or a plurality of mobility management entity node(s),
-- one or a plurality of serving gateway node(s),
-- one or a plurality of packet gateway node(s)
-- one or a plurality of network layers of the mobile communications network,
wherein the physical and/or virtual machines (201, 202, 203, 204) are **characterized by** being configured such that:
-- the specific physical and/or virtual machine is provided with the common configuration image by means of transmitting operating system data (211) from the image database entity (210) to the specific physical and/or virtual machine, wherein the common configuration image comprises an operating system and a configuration management client (231), wherein the operating system data (211) correspond to a basic version of the operating system of the specific physical and/or virtual machine,
-- the configuration management client (231) requests, from a configuration management entity (230) of the communications network (100), configuration management data (233) in order to finalize the configuration of the specific physical and/or virtual machine by modifying the configuration provided by the common configuration image,
-- snapshot data (221) of the specific physical and/or virtual machine are transmitted to a snapshot database entity (220) of the communications network (100).

12. Orchestration entity (200) for enhanced management and/or deployment of network nodes of a communications network (100), wherein the communications network (100) is a mobile communications network and comprises a plurality of physical and/or virtual machines (201, 202, 203, 204) in a network architecture of the communications network (100) realizing software defined network technologies, wherein at least one of the plurality of physical and/or virtual machines (201, 202, 203, 204) realizes or is associated with at least one network node functionality of the communications network (100), wherein an image database entity (210) of the communication network (100) retains a common configuration image of a specific physical and/or virtual machine of the plurality of physical and/or virtual machines (201, 202, 203, 204), wherein the plurality of physical and/or virtual machines (201, 202, 203, 204) realize or are associated with the network node functionality of at least one of the following:
-- one or a plurality of mobility management entity node(s),
-- one or a plurality of serving gateway node(s),
-- one or a plurality of packet gateway node(s)
-- one or a plurality of network layers of the mobile communications network,
wherein the orchestration entity (200) is **characterized by** being configured such that
-- the specific physical and/or virtual machine is provided with the common configuration image by means of transmitting operating system data (211) from the image database entity (210) to the specific physical and/or virtual machine, wherein the common configuration image comprises an operating system and a configuration management client (231), wherein the operating system data (211) correspond to a basic version of the operating system of the specific physical and/or virtual machine,
-- the configuration management client (231) requests, from a configuration management entity (230) of the communications network (100), configuration management data (233) in order to finalize the configuration of the specific physical and/or virtual machine by modifying the configuration provided by the common configuration image,
-- snapshot data (221) of the specific physical and/or virtual machine are transmitted to a snapshot database entity (220) of the communications network (100).

13. Program comprising a computer readable program code which, when executed on a computer or on a physical and/or virtual machine of a communications network (100) causes the computer or the physical and/or virtual machine of the communications network (100) to perform a method according to any one of claims 1 to 7.

14. Computer program product for enhanced management and/or deployment of network nodes of a communications network (100), the computer program product comprising a computer program stored on a storage medium, the computer program comprising program code which, when executed on a computer or on a physical and/or virtual machine of a communications network (100) causes the computer or the physical and/or virtual machine of the communications network (100) to perform a method according to any one of claims 1 to 7.

## Patentansprüche

1. Verfahren zur verbesserten Verwaltung und/oder Verwendung von Netzwerkknoten eines Kommunikationsnetzwerkes (100), wobei das Kommunikationsnetzwerk (100) ein Mobilkommunikationsnetzwerk ist und mehrere physische und/oder virtuelle Maschinen (201, 202, 203, 204) in einer Netzwerkarchitektur des Kommunikationsnetzwerkes (100) umfasst, die Software-definierte Netzwerktechnologien realisiert, wobei mindestens eine der mehreren physischen und/oder virtuellen Maschinen (201, 202, 203, 204) mindestens eine Netzwerkknotenfunktionalität des Kommunikationsnetzwerkes (100) realisiert oder damit verknüpft ist, wobei eine Image-Datenbankentität (210) des Kommunikationsnetzwerkes (100) ein gemeinsames Konfigurations-Image einer spezifischen physischen und/oder virtuellen Maschine der mehreren physischen und/oder virtuellen Maschinen (201, 202, 203, 204) verwahrt,
wobei die mehreren physischen und/oder virtuellen Maschinen (201, 202, 203, 204) die Netzwerkknotenfunktionalität von mindestens einem von Folgendem realisieren oder damit verknüpft sind:
- einem oder mehreren Mobilitätsverwaltungsentitätsknoten,
- einem oder mehreren bedienenden Gateway-Knoten,
- einem oder mehreren Packet-Gateway-Knoten,
- einer oder mehreren Netzwerkschichten des Mobilkommunikationsnetzwerkes,
wobei das Verfahren durch die folgenden Schritte gekennzeichnet ist:
- in einem ersten Schritt wird an die spezifische physische und/oder virtuelle Maschine das gemeinsame Konfigurations-Image mittels Übertragen von Betriebssystemdaten (211) von der Image-Datenbankentität (210) an die spezifische physische und/oder virtuelle Maschine übermittelt, wobei das gemeinsame Konfigurations-Image ein Betriebssystem und einen Konfigurationsverwaltungs-Client (231) umfasst, wobei die Betriebssystemdaten (211) einer Basisversion des Betriebssystems der spezifischen physischen und/oder virtuellen Maschine entsprechen,
- in einem zweiten Schritt, im Anschluss an den ersten Schritt, fordert der verwaltungs-Client (231) von einer Konfigurationsverwaltungsentität (230) des Kommunikationsnetzwerkes (100) Konfigurationsverwaltungsdaten (233) an, um die Konfiguration der spezifischen physischen und/oder virtuellen Maschine abzuschließen, indem die durch das gemeinsame Konfigurations-Image übermittelte Konfiguration modifiziert wird,
- in einem dritten Schritt, im Anschluss an den zweiten Schritt, werden Momentaufnahme-Daten (221) der spezifischen physischen und/oder virtuellen Maschine an eine Momentaufnahme-Datenbankentität (220) des Kommunikationsnetzwerkes (100) übertragen.

2. Verfahren nach Anspruch 1, wobei das Verfahren des Weiteren, im Anschluss an den dritten Schritt, einen vierten Schritt umfasst, wobei in dem vierten Schritt eine Aktualisierung oder eine Änderung der Konfiguration der spezifischen physischen und/oder virtuellen Maschine der mehreren physischen und/oder virtuellen Maschinen (201, 202, 203, 204) durchgeführt wird, indem die Konfigurationsverwaltungsentität (230) veranlasst wird, die Konfiguration der spezifischen physischen und/oder virtuellen Maschine zu aktualisieren oder zu ändern, wodurch weitere Konfigurationsverwaltungsdaten (234) übertragen werden.

3. Verfahren nach Anspruch 2, wobei das Verfahren des Weiteren, in dem Anschluss an den vierten Schritt, einen fünften Schritt umfasst, wobei in dem fünften Schritt weitere Momentaufnahme-Daten (222) der spezifischen physischen und/oder virtuellen Maschine an die Momentaufnahme-Datenbankentität (220) des Kommunikationsnetzwerkes (100) übertragen werden.

4. Verfahren nach Anspruch 3, wobei das Verfahren des Weiteren, im Anschluss an den fünften Schritt, einen sechsten Schritt umfasst, wobei in dem sechsten Schritt Wiederherstellungsdaten (242) bezüglich der spezifischen physischen und/oder virtuellen Maschine von der Momentaufnahme-Datenbankentität (220) des Kommunikationsnetzwerkes (100) an die spezifische physische und/oder virtuelle Maschine übertragen werden.

5. Verfahren nach einem der vorangehenden Ansprüche, wobei der Konfigurationsverwaltungs-Client (231) als ein Teil des Betriebssystems installiert wird und/oder wobei der Konfigurationverwaltungs-Client (231) für die spezifische physische und/oder virtuelle Maschine spezifisch ist.

6. Verfahren nach einem der vorangehenden Ansprüche, wobei während des zweiten Schrittes der Konfigurationsverwaltungs-Client (231), vor dem Anfordern der Konfigurationsverwaltungs-Daten (233), durch den Konfigurationsverwaltungs-Instanz (230) des Kommunikationsnetzwerkes (100) authentifiziert wird.

7. Verfahren nach einem der vorangehenden Ansprüche, wobei
- die eine oder die mehreren Netzwerkschichten des Mobilkommunikationsnetzwerkes verschiedenen Funkzugangstechnologien zugeordnet sind.

8. Kommunikationsnetzwerk (100) zur verbesserten Verwaltung und/oder Verwendung von Netzwerkknoten eines Kommunikationsnetzwerkes (100), wobei das Kommunikationsnetzwerk (100) ein Mobilkommunikationsnetzwerk ist und eine Konfigurationsverwaltungsentität (231), eine Momentaufnahme-Datenbankentität (220), eine Image-Datenbankentität (210) und mehrere physische und/oder virtuelle Maschinen (201, 202, 203, 204) in einer Netzwerkarchitektur des Kommunikationsnetzwerkes (100) umfasst, die Software-definierte Netzwerktechnologien realisiert, wobei mindestens eine der mehreren physischen und/oder virtuellen Maschinen (201, 202, 203, 204) mindestens eine Netzwerkknotenfunktionalität des Kommunikationsnetzwerkes (100) realisiert oder damit verknüpft ist, wobei die Image-Datenbankentität (210) ein gemeinsames Konfigurations-Image einer spezifischen physischen und/oder virtuellen Maschine der mehreren physischen und/oder virtuellen Maschinen (201, 202, 203, 204) verwahrt,
wobei die mehreren physischen und/oder virtuellen Maschinen (201, 202, 203, 204) die Netzwerkknotenfunktionalität von mindestens einem von Folgendem realisieren oder damit verknüpft sind:
- einem oder mehreren Mobilitätsverwaltungsentitätsknoten,
- einem oder mehreren bedienenden Gateway-Knoten,
- einem oder mehreren Packet-Gateway-Knoten,
- einer oder mehreren Netzwerkschichten des Mobilkommunikationsnetzwerkes,
wobei das Kommunikationsnetzwerk (100) **dadurch gekennzeichnet ist, dass** es so eingerichtet ist, dass
- an die spezifische physische und/oder virtuelle Maschine das gemeinsame Konfigurations-Image mittels Übertragen von Betriebssystemdaten (211) von der Image-Datenbankentität (210) an die spezifische physische und/oder virtuelle Maschine übermittelt wird, wobei das gemeinsame Konfigurations-Image ein Betriebssystem und einen Konfigurationsverwaltungs-Client (231) umfasst, wobei die Betriebssystemdaten (211) einer Basisversion des Betriebssystems der spezifischen physischen und/oder virtuellen Maschine entsprechen,
- der Konfigurationsverwaltungs-Client (231) von der Konfigurationsverwaltungsentität (230) Konfigurationsverwaltungsdaten (233) anfordert, um die Konfiguration der spezifischen physischen und/oder virtuellen Maschine abzuschließen, indem die durch das gemeinsame Konfigurations-Image übermittelte Konfiguration modifiziert wird,
- Momentaufnahme-Daten (221) der spezifischen physischen und/oder virtuellen Maschine an die Momentaufnahme-Datenbankentität (220) übertragen werden.

9. Kommunikationsnetzwerk (100) nach Anspruch 8, wobei das Kommunikationsnetzwerk (100) neben der Momentaufnahme-Datenbankentität (220) und der Konfigurationsverwaltungsentität (230) noch eine Orchestrierungsentität (200) umfasst.

10. Kommunikationsnetzwerk (100) nach Anspruch 9, wobei das Kommunikationsnetzwerk (100) und/oder die Orchestrierungsentität (200) so eingerichtet sind, dass
- die Image-Datenbankentität (210) durch die Orchestrierungsentität (200) veranlasst wird, den Konfigurationsverwaltungs-Client (231) und/oder die Betriebssystemdaten (211) an die spezifische physische und/oder virtuelle Maschine zu übertragen, und/oder
- die Konfigurationsverwaltungsentität (230) und/oder der Konfigurationsverwaltungs-Client (231) und/oder die spezifische physische und/oder virtuelle Maschine durch die Orchestrierungsentität (200) veranlasst werden, die Konfigurationsverwaltungsdaten (233) zu übertragen, um die Konfiguration der spezifischen physischen und/oder virtuellen Maschine abzuschließen und/oder um die weiteren Konfigurationsverwaltungsdaten (234) zu übertragen, und/oder
- die Momentaufnahme-Datenbankentität (220) und/oder der Konfigurationsverwaltungs-Client (231) und/oder die spezifische physische und/oder virtuelle Maschine durch die Orchestrierungsentität (200) veranlasst werden, Momentaufnahme-Daten (221) der spezifischen physischen und/oder virtuellen Maschine und/oder weitere Momentaufnahme-Daten (222) der spezifischen physischen und/oder virtuellen Maschine an die Momentaufnahme-Datenbankentität (220) des Kommunikationsnetzwerkes (100) zu übertragen.

11. Mehrere physische und/oder virtuelle Maschinen (201, 202, 203, 204) zur verbesserten Verwaltung und/oder Verwendung von Netzwerkknoten eines Kommunikationsnetzwerkes (100), wobei die mehreren physischen und/oder virtuellen Maschinen (201, 202, 203, 204) Teil des Kommunikationsnetzwerkes (100) sind, wobei das Kommunikationsnetzwerk (100) ein Mobilkommunikationsnetzwerk ist, das eine Netzwerkarchitektur aufweist, die Software-definierte Netzwerktechnologien realisiert, wobei mindestens eine der mehreren physischen und/oder virtuellen Maschinen (201, 202, 203, 204) mindestens eine Netzwerkknotenfunktionalität des Kommunikationsnetzwerkes (100) realisiert oder damit verknüpft ist, wobei eine Image-Datenbankentität (210) des Kommunikationsnetzwerkes (100) ein gemeinsames Konfigurations-Image einer spezifischen physischen und/oder virtuellen Maschine der mehreren physischen und/oder virtuellen Maschinen (201, 202, 203, 204) verwahrt,
wobei die mehreren physischen und/oder virtuellen Maschinen (201, 202, 203, 204) die Netzwerkknotenfunktionalität von mindestens einem von Folgendem realisieren oder damit verknüpft sind:
- einem oder mehreren Mobilitätsverwaltungsentitätsknoten,
- einem oder mehreren bedienenden Gateway-Knoten,
- einem oder mehreren Packet-Gateway-Knoten,
- einer oder mehreren Netzwerkschichten des Mobilkommunikationsnetzwerkes,
wobei die physischen und/oder virtuellen Maschinen (201, 202, 203, 204) **dadurch gekennzeichnet sind, dass** sie so eingerichtet sind, dass:
- an die spezifische physische und/oder virtuelle Maschine das gemeinsame Konfigurations-Image mittels Übertragen von Betriebssystemdaten (211) von der Image-Datenbankentität (210) an die spezifische physische und/oder virtuelle Maschine übermittelt wird, wobei das gemeinsame Konfigurations-Image ein Betriebssystem und einen Konfigurationsverwaltungs-Client (231) umfasst, wobei die Betriebssystemdaten (211) einer Basisversion des Betriebssystems der spezifischen physischen und/oder virtuellen Maschine entsprechen,
- der Konfigurationsverwaltungs-Client (231) von einer Konfigurationsverwaltungsentität (230) des Kommunikationsnetzwerkes (100) Konfigurationsverwaltungsdaten (233) anfordert, um die Konfiguration der spezifischen physischen und/oder virtuellen Maschine abzuschließen, indem die durch das gemeinsame Konfigurations-Image übermittelte Konfiguration modifiziert wird,
- Momentaufnahme-Daten (221) der spezifischen physischen und/oder virtuellen Maschine an eine Momentaufnahme-Datenbankentität (220) des Kommunikationsnetzwerkes (100) übertragen werden.

12. Orchestrierungsentität (200) zur verbesserten Verwaltung und/oder Verwendung von Netzwerkknoten eines Kommunikationsnetzwerkes (100), wobei das Kommunikationsnetzwerk (100) ein Mobilkommunikationsnetzwerk ist und mehrere physische und/oder virtuelle Maschinen (201, 202, 203, 204) in einer Netzwerkarchitektur des Kommunikationsnetzwerkes (100) umfasst, die Software-definierte Netzwerktechnologien realisiert, wobei mindestens eine der mehreren physischen und/oder virtuellen Maschinen (201, 202, 203, 204) mindestens eine Netzwerkknotenfunktionalität des Kommunikationsnetzwerkes (100) realisiert oder damit verknüpft ist, wobei eine Image-Datenbankentität (210) des Kommunikationsnetzwerkes (100) ein gemeinsames Konfigurations-Image einer spezifischen physischen und/oder virtuellen Maschine der mehreren physischen und/oder virtuellen Maschinen (201, 202, 203, 204) verwahrt,
wobei die mehreren physischen und/oder virtuellen Maschinen (201, 202, 203, 204) die Netzwerkknotenfunktionalität von mindestens einem von Folgendem realisieren oder damit verknüpft sind:
- einem oder mehreren Mobilitätsverwaltungsentitätsknoten,
- einem oder mehreren bedienenden Gateway-Knoten,
- einem oder mehreren Packet-Gateway-Knoten,
- einer oder mehreren Netzwerkschichten des Mobilkommunikationsnetzwerkes,
wobei die Orchestrierungsentität (200) **dadurch gekennzeichnet ist, dass** sie so eingerichtet ist, dass
- an die spezifische physische und/oder virtuelle Maschine das gemeinsame Konfigurations-Image mittels Übertragen von Betriebssystemdaten (211) von der Image-Datenbankentität (210) an die spezifische physische und/oder virtuelle Maschine übermittelt wird, wobei das gemeinsame Konfigurations-Image ein Betriebssystem und einen Konfigurationsverwaltungs-Client (231) umfasst, wobei die Betriebssystemdaten (211) einer Basisversion des Betriebssystems der spezifischen physischen und/oder virtuellen Maschine entsprechen,
- der Konfigurationsverwaltungs-Client (231) von einer Konfigurationsverwaltungsentität (230) des Kommunikationsnetzwerkes (100) Konfigurationsverwaltungsdaten (233) anfordert, um die Konfiguration der spezifischen physischen und/oder virtuellen Maschine abzuschließen, indem die durch das gemeinsame Konfigurations-Image übermittelte Konfiguration modifiziert wird,
- Momentaufnahme-Daten (221) der spezifischen physischen und/oder virtuellen Maschine an eine Momentaufnahme-Datenbankentität (220) des Kommunikationsnetzwerkes (100) übertragen werden.

13. Programm, umfassend einen computerlesbaren Programmcode, der, wenn er auf einem Computer oder auf einer physischen und/oder virtuellen Maschine eines Kommunikationsnetzwerkes (100) ausgeführt wird, den Computer oder die physische und/oder virtuelle Maschine des Kommunikationsnetzwerkes (100) veranlasst, ein Verfahren nach einem der Ansprüche 1 bis 7 durchzuführen.

14. Computerprogrammprodukt zur verbesserten Verwaltung und/oder Verwendung von Netzwerkknoten eines Kommunikationsnetzwerkes (100), wobei das Computerprogrammprodukt ein auf einem Speichermedium gespeichertes Computerprogramm umfasst, wobei das Computerprogramm Programmcode umfasst, der, wenn er auf einem Computer oder auf einer physischen und/oder virtuellen Maschine eines Kommunikationsnetzwerkes (100) ausgeführt wird, den Computer oder die physische und/oder virtuelle Maschine des Kommunikationsnetzwerkes (100) veranlasst, ein Verfahren nach einem der Ansprüche 1 bis 7 durchzuführen.

## Revendications

1. Procédé permettant une gestion et/ou un déploiement amélioré(e)(s) de nœuds de réseau d'un réseau de communication (100), dans lequel le réseau de communication (100) est un réseau de communication mobile et comprend une pluralité de machines physiques et/ou virtuelles (201, 202, 203, 204) dans une architecture de réseau du réseau de communication (100) mettant en œuvre des technologies de réseau définies par logiciel, dans lequel au moins une machine de la pluralité de machines physiques et/ou virtuelles (201, 202, 203, 204) met en œuvre ou est associée à au moins une fonctionnalité de nœud de réseau du réseau de communication (100), dans lequel une entité de base de données d'images (210) du réseau de communication (100) conserve une image de configuration commune d'une machine physique et/ou virtuelle spécifique de la pluralité de machines physiques et/ou virtuelles (201, 202, 203, 204), dans lequel :
la pluralité de machines physiques et/ou virtuelles (201, 202, 203, 204) met en œuvre ou est associée à la fonctionnalité de nœud de réseau de :
- un nœud ou une pluralité de nœuds d'entité(s) de gestion de mobilité, et/ou
- un nœud ou une pluralité de nœuds de passerelle (s) de desserte, et/ou
- un nœud ou une pluralité de nœuds de passerelle (s) en mode paquet, et/ou
- une couche ou une pluralité de couches de réseau du réseau de communication mobile,
dans lequel le procédé est **caractérisé par** les étapes suivantes :
- dans une première étape, la machine physique et/ou virtuelle spécifique est pourvue de l'image de configuration commune, moyennant la transmission de données de système d'exploitation (211), de l'entité de base de données d'images (210) à la machine physique et/ou virtuelle spécifique, dans lequel l'image de configuration commune comprend un système d'exploitation et un client de gestion de configuration (231), dans lequel les données de système d'exploitation (211) correspondent à une version de base du système d'exploitation de la machine physique et/ou virtuelle spécifique,
- dans une deuxième étape faisant suite à la première étape, le client de gestion de configuration (231) demande, à une entité de gestion de configuration (230) du réseau de communication (100), des données de gestion de configuration (233) afin de finaliser la configuration de la machine physique et/ou virtuelle spécifique en modifiant la configuration fournie par l'image de configuration commune,
- dans une troisième étape faisant suite à la deuxième étape, des données d'instantané (221) de la machine physique et/ou virtuelle spécifique sont transmises à une entité de base de données d'instantanés (220) du réseau de communication (100).

2. Procédé selon la revendication 1, dans lequel le procédé comprend en outre, à la suite de la troisième étape, une quatrième étape, dans lequel, dans la quatrième étape, une mise à jour ou une modification de la configuration de la machine physique et/ou virtuelle spécifique de la pluralité de machines physiques et/ou virtuelles (201, 202, 203, 204) est réalisée, moyennant le déclenchement de l'entité de gestion de configuration (230) pour mettre à jour ou modifier la configuration de la machine physique et/ou virtuelle spécifique, ce qui permet de transmettre d'autres données de gestion de configuration (234).

3. Procédé selon la revendication 2, dans lequel le procédé comprend en outre, à la suite de la quatrième étape, une cinquième étape, dans lequel, dans la cinquième étape, d'autres données d'instantané (222) de la machine physique et/ou virtuelle spécifique sont transmises à l'entité de base de données d'instantanés (220) du réseau de communication (100).

4. Procédé selon la revendication 3, dans lequel le procédé comprend en outre, à la suite de la cinquième étape, une sixième étape, dans lequel, dans la sixième étape, des données de reprise (242) concernant la machine physique et/ou virtuelle spécifique sont transmises de l'entité de base de données d'instantanés (220) du réseau de communication (100) à la machine physique et/ou virtuelle spécifique.

5. Procédé selon l'une des revendications précédentes, dans lequel le client de gestion de configuration (231) est installé en tant que partie du système d'exploitation et/ou dans lequel le client de gestion de configuration (231) est spécifique à la machine physique et/ou virtuelle spécifique.

6. Procédé selon l'une des revendications précédentes, dans lequel, au cours de la deuxième étape, le client de gestion de configuration (231) est authentifié - avant de demander les données de gestion de configuration (233) - par l'entité de gestion de configuration (230) du réseau de communication (100).

7. Procédé selon l'une des revendications précédentes, dans lequel :
- la couche ou la pluralité de couches de réseau du réseau de communication mobile est ou sont liée(s) à une ou des technologie(s) différente(s) d'accès radioélectrique.

8. Réseau de communication (100) permettant une gestion et/ou un déploiement amélioré(e)(s) de nœuds de réseau d'un réseau de communication (100), dans lequel le réseau de communication (100) est un réseau de communication mobile et comprend une entité de gestion de configuration (231), une entité de base de données d'instantanés (220), une entité de base de données d'images (210) et une pluralité de machines physiques et/ou virtuelles (201, 202, 203, 204) dans une architecture de réseau du réseau de communication (100) mettant en œuvre des technologies de réseau définies par logiciel, dans lequel au moins une machine de la pluralité de machines physiques et/ou virtuelles (201, 202, 203, 204) met en œuvre ou est associée à au moins une fonctionnalité de nœud de réseau du réseau de communication (100), dans lequel l'entité de base de données d'images (210) conserve une image de configuration commune d'une machine physique et/ou virtuelle spécifique de la pluralité de machines physiques et/ou virtuelles (201, 202, 203, 204), dans lequel :
la pluralité de machines physiques et/ou virtuelles (201, 202, 203, 204) met en œuvre ou est associée à la fonctionnalité de nœud de réseau de :
- un nœud ou une pluralité de nœuds d'entité(s) de gestion de mobilité, et/ou
- un nœud ou une pluralité de nœuds de passerelle (s) de desserte, et/ou
- un nœud ou une pluralité de nœuds de passerelle (s) en mode paquet, et/ou
- une couche ou une pluralité de couches de réseau du réseau de communication mobile,
dans lequel le réseau de communications (100) est **caractérisé en ce qu'**il est configuré de manière que :
- la machine physique et/ou virtuelle spécifique soit pourvue de l'image de configuration commune, moyennant la transmission de données de système d'exploitation (211), de l'entité de base de données d'images (210) à la machine physique et/ou virtuelle spécifique, dans lequel l'image de configuration commune comprend un système d'exploitation et un client de gestion de configuration (231), dans lequel les données de système d'exploitation (211) correspondent à une version de base du système d'exploitation de la machine physique et/ou virtuelle spécifique,
- le client de gestion de configuration (231) demande, à l'entité de gestion de configuration (230), des données de gestion de configuration (233) afin de finaliser la configuration de la machine physique et/ou virtuelle spécifique en modifiant la configuration fournie par l'image de configuration commune,
- des données d'instantané (221) de la machine physique et/ou virtuelle spécifique soient transmises à l'entité de base de données d'instantanés (220).

9. Réseau de communication (100) selon la revendication 8, dans lequel le réseau de communication (100) comprend, outre l'entité de base de données d'instantanés (220) et l'entité de gestion de configuration (230), une entité d'orchestration (200).

10. Réseau de communication (100) selon la revendication 9, dans lequel le réseau de communication (100) et/ou l'entité d'orchestration (200) est ou sont configuré(e)(s) de manière que :
- l'entité de base de données d'images (210) soit déclenchée, par l'entité d'orchestration (200), afin de transmettre le client de gestion de configuration (231) et/ou les données de système d'exploitation (211) à la machine physique et/ou virtuelle spécifique, et/ou
- l'entité de gestion de configuration (230) et/ou le client de gestion de configuration (231) et/ou la machine physique et/ou virtuelle spécifique soi(en)t déclenché(e)(s), par l'entité d'orchestration (200), afin de transmettre les données de gestion de configuration (233) afin de finaliser la configuration de la machine physique et/ou virtuelle spécifique et/ou de transmettre les autres données de gestion de configuration (234), et/ou
- l'entité de base de données d'instantanés (220) et/ou le client de gestion de configuration (231) et/ou la machine physique et/ou virtuelle spécifique soi(en)t déclenché(e)(s), par l'entité d'orchestration (200), afin de transmettre des données d'instantané (221) de la machine physique et/ou virtuelle spécifique et/ou d'autres données d'instantané (222) de la machine physique et/ou virtuelle spécifique à l'entité de base de données d'instantanés (220) du réseau de communication (100).

11. Pluralité de machines physiques et/ou virtuelles (201, 202, 203, 204) permettant une gestion et/ou un déploiement amélioré(e)(s) de nœuds de réseau d'un réseau de communication (100), dans laquelle la pluralité de machines physiques et/ou virtuelles (201, 202, 203, 204) fait partie du réseau de communication (100), dans laquelle le réseau de communication (100) est un réseau de communication mobile ayant une architecture mettant en œuvre des technologies de réseau définies par logiciel, dans laquelle au moins une machine de la pluralité de machines physiques et/ou virtuelles (201, 202, 203, 204) met en œuvre ou est associée à au moins une fonctionnalité de nœud de réseau du réseau de communication (100), dans laquelle une entité de base de données d'images (210) du réseau de communication (100) conserve une image de configuration commune d'une machine physique et/ou virtuelle spécifique de la pluralité de machines physiques et/ou virtuelles (201, 202, 203, 204), dans laquelle la pluralité de machines physiques et/ou virtuelles (201, 202, 203, 204) met en œuvre ou est associée à la fonctionnalité de nœud de réseau de :
- un nœud ou une pluralité de nœuds d'entité(s) de gestion de mobilité, et/ou
- un nœud ou une pluralité de nœuds de passerelle (s) de desserte, et/ou
- un nœud ou une pluralité de nœuds de passerelle (s) en mode paquet, et/ou
- une couche ou une pluralité de couches de réseau du réseau de communication mobile,
dans laquelle les machines physiques et/ou virtuelles (201, 202, 203, 204) sont **caractérisées en ce qu'**elles sont configurées de manière que :
- la machine physique et/ou virtuelle spécifique soit pourvue de l'image de configuration commune, moyennant la transmission de données de système d'exploitation (211), de l'entité de base de données d'images (210) à la machine physique et/ou virtuelle spécifique, dans laquelle l'image de configuration commune comprend un système d'exploitation et un client de gestion de configuration (231), dans laquelle les données de système d'exploitation (211) correspondent à une version de base du système d'exploitation de la machine physique et/ou virtuelle spécifique,
- le client de gestion de configuration (231) demande, à une entité de gestion de configuration (230) du réseau de communication (100), des données de gestion de configuration (233) afin de finaliser la configuration de la machine physique et/ou virtuelle spécifique en modifiant la configuration fournie par l'image de configuration commune,
- des données d'instantané (221) de la machine physique et/ou virtuelle spécifique soient transmises à une entité de base de données d'instantanés (220) du réseau de communication (100).

12. Entité d'orchestration (200) permettant une gestion et/ou un déploiement amélioré(e)(s) de nœuds de réseau d'un réseau de communication (100), dans laquelle le réseau de communication (100) est un réseau de communication mobile et comprend une pluralité de machines physiques et/ou virtuelles (201, 202, 203, 204) dans une architecture de réseau du réseau de communication (100) mettant en œuvre des technologies de réseau définies par logiciel, dans laquelle au moins une machine de la pluralité de machines physiques et/ou virtuelles (201, 202, 203, 204) met en œuvre ou est associée à au moins une fonctionnalité de nœud de réseau du réseau de communication (100), dans laquelle une entité de base de données d'images (210) du réseau de communication (100) conserve une image de configuration commune d'une machine physique et/ou virtuelle spécifique de la pluralité de machines physiques et/ou virtuelles (201, 202, 203, 204),
dans laquelle la pluralité de machines physiques et/ou virtuelles (201, 202, 203, 204) met en œuvre ou est associée à la fonctionnalité de nœud de réseau de :
- un nœud ou une pluralité de nœuds d'entité(s) de gestion de mobilité, et/ou
- un nœud ou une pluralité de nœuds de passerelle (s) de desserte, et/ou
- un nœud ou une pluralité de nœuds de passerelle (s) en mode paquet, et/ou
- une couche ou une pluralité de couches de réseau du réseau de communication mobile,
dans laquelle l'entité d'orchestration (200) est **caractérisée en ce qu'**elle est configurée de manière que :
- la machine physique et/ou virtuelle spécifique soit pourvue de l'image de configuration commune, moyennant la transmission de données de système d'exploitation (211), de l'entité de base de données d'images (210) à la machine physique et/ou virtuelle spécifique, dans laquelle l'image de configuration commune comprend un système d'exploitation et un client de gestion de configuration (231), dans laquelle les données de système d'exploitation (211) correspondent à une version de base du système d'exploitation de la machine physique et/ou virtuelle spécifique,
- le client de gestion de configuration (231) demande, à une entité de gestion de configuration (230) du réseau de communication (100), des données de gestion de configuration (233) afin de finaliser la configuration de la machine physique et/ou virtuelle spécifique en modifiant la configuration fournie par l'image de configuration commune,
- des données d'instantané (221) de la machine physique et/ou virtuelle spécifique soient transmises à une entité de base de données d'instantanés (220) du réseau de communication (100).

13. Programme comprenant un code de programme lisible par ordinateur, qui, lorsqu'il est exécuté sur un ordinateur ou sur une machine physique et/ou virtuelle d'un réseau de communication (100) fait mettre en œuvre à l'ordinateur ou à la machine physique et/ou virtuelle du réseau de communication (100) un procédé selon l'une quelconque des revendications 1 à 7.

14. Produit-programme informatique permettant une gestion et/ou un déploiement amélioré(e)(s) de nœuds de réseau d'un réseau de communication (100), le produit-programme informatique comprenant un programme informatique stocké sur un support de stockage, le programme informatique comprenant un code de programme qui, lorsqu'il est exécuté sur un ordinateur ou sur une machine physique et/ou virtuelle d'un réseau de communication (100) fait mettre en œuvre à l'ordinateur ou à la machine physique et/ou virtuelle du réseau de communication (100) un procédé selon l'une quelconque des revendications 1 à 7.
